# EUROPÄISCHE PATENTSCHRIFT

(11) **EP 0 827 797 B1**
(45) Veröffentlichungstag und Bekanntmachung des Hinweises auf die Patenterteilung: **02.01.2002**
(21) Anmeldenummer: 97115239.2
(22) Anmeldetag: 03.09.1997
(51) Int. Cl.: B23C 3/05, B23B 51/10

(54) **Werkzeug zur spanabtragenden Bearbeitung von Bohrungsoberflächen**
Tool for the working of surfaces with holes
Outil à enlèvement de copeaux de surfaces de trous

(30) Priorität: 06.09.1996 DE 19636127; 05.09.1996 DE 19636045
(43) Veröffentlichungstag der Anmeldung: 11.03.1998
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- DE-A- 19 519 639
- FR-A- 2 383 738
- US-A- 4 789 280

## Beschreibung

Die Erfindung betrifft ein Werkzeug zur spanabtragenden Bearbeitung von Bohrungsoberflächen mit mindestens zwei gegeneinander verlagerbaren Teilwerkzeugen gemäß Oberbegriff des Anspruchs 1.

Werkzeuge der hier angesprochenen Art sind bekannt. Sie dienen dazu, innerhalb eines Werkstücks mindestens zwei Bohrungsoberflächen zu bearbeiten, beispielsweise in dem Zylinderkopf einer Brennkraftmaschine die Flächen für den Ventilsitz und für die Ventilführung. DE 44 31 149 A1. Bei dem bekannten Werkzeug wird die Relativbewegung der Teilwerkzeuge in axialer Richtung durch einen externen Antrieb bewirkt. Dies führt zu einem sehr aufwendigen und raumintensiven Aufbau der Antriebseinrichtung.

Es ist daher Aufgabe der Erfindung, ein Werkzeug der Eingangs genannten Art zu schaffen, das diese Nachteile nicht aufweist und sich durch einen sehr kompakten Aufbau auszeichnet.

Zur Lösung dieser Aufgabe wird ein Werkzeug vorgeschlagen, daß die in Anspruch 1 genannten Merkmale umfaßt. Das Werkzeug zeichnet sich dadurch aus, daß es einen ersten Kolben umfaßt, der zur Erzeugung einer Ausfahrbewegung des inneren Teilwerkzeugs mit einem unter Druck stehenden ersten Medium beaufschlagbar ist. Der erste Kolben verdrängt bei einer durch das Medium bewirkten Ausfahrbewegung ein zweites Medium über einen Verbindungskanal in einen Ausgleichsraum, der konzentrisch um die Drehachse des Werkzeugs angeordnet und als Ringraum ausgebildet ist. In diesem Ringraum ist ein ringförmig ausgebildeter Ausgleichskolben beweglich angeordnet, der bei einer Bewegung des ersten Kolbens ebenfalls verlagert wird. Durch die ringförmige Ausgestaltung des Ausgleichskolbens wird erreicht, daß das Werkzeug mit den beiden Kolben sehr kompakt und kurz baut, was insbesondere bei der Verwendung in automatischen Bearbeitungsstationen sehr vorteilhaft ist. Je kürzer das Werkzeug nämlich baut, um so exakter sind die bearbeiteten Bohrungen.

Weiterhin wird ein Ausführungsbeispiel des Werkzeugs bevorzugt, das sich dadurch auszeichnet, daß in dem Verbindungskanal zum Ausgleichsraum eine Drosseleinrichtung vorgesehen ist, die die Abströmung des durch den Verbindungskanal strömenden Mediums beeinflußt. Dadurch, daß bei der Bewegung des inneren Teilwerkzeugs, das der Bearbeitung der Ventilführung dient, eine Drosseleinrichtung mit einer Drossel vorgesehen wird, kann die Bewegung dieses Teilwerkzeugs, das heißt dessen Vorschubgeschwindigkeit, so beeinflußt werden, daß die Oberflächenqualität im Bereich der Ventilführung die gewünschten Eigenschaften aufweist. Insbesondere ist es möglich, eine gleichmäßige langsame Vorschubbewegung des Teilwerkzeugs zu gewährleisten und damit die gewünschte Oberflächengüte und Maßhaltigkeit zu gewährleisten.

Bevorzugt wird ein Ausführungsbeispiel des Werkzeugs, daß sich dadurch auszeichnet, daß die Drosseleinrichtung eine Konstantdrossel ist. Ein derartiger Aufbau ist einfach und kostengünstig realisierbar.

Weiterhin wird ein Ausführungsbeispiel des Werkzeugs bevorzugt, bei dem die Drosseleinrichtung mindestens ein Rückschlagventil umfaßt, daß so ausgebildet ist, daß die Drossel der Drosseleinrichtung während einer ersten Bewegung des der Ventilführung dienenden Teilwerkzeugs wirkt, während bei einer zweiten Bewegung das Rückschlagventil wirksam wird. Es ist damit möglich, das zweite Teilwerkzeug mit einer langsamen Vorschub- und mit einer raschen Rückzugsgeschwindigkeit zu beaufschlagen.

Besonders bevorzugt wird weiterhin ein Ausführungsbeispiel des Werkzeugs, das sich dadurch auszeichnet, daß das bei einer Vorwärtsbewegung verdrängte Medium in einen Ausgleichsraum befördert wird, der von einem -vorzugsweise ringförmig ausgebildeten-Ausgleichskolben abgeschlossen wird, dessen Wirkfläche größer ist als die eines Kolbens, der mit dem beweglichen Teilwerkzeug zusammenwirkt. Auf diese Weise kann das Werkzeug sehr kompakt aufgebaut werden.

Bevorzugt wird ein Ausführungsbeispiel des Werkzeugs, das sich dadurch auszeichnet, daß zwei verschiedene Medien einsetzbar sind. Das erste Medium wirkt auf die eine Seite des ersten Kolbens, während das zweite Medium auf der zweiten Seite des ersten Kolbens vorhanden ist und mit dem Ausgleichskolben zusammenwirkt. Durch die Medientrennung ist gewährleistet, daß Verunreinigungen im ersten Medium die Funktion des Ausgleichskolbens nicht beeinträchtigen können.

Weitere Ausgestaltungen ergeben sich aus den übrigen Unteransprüchen.

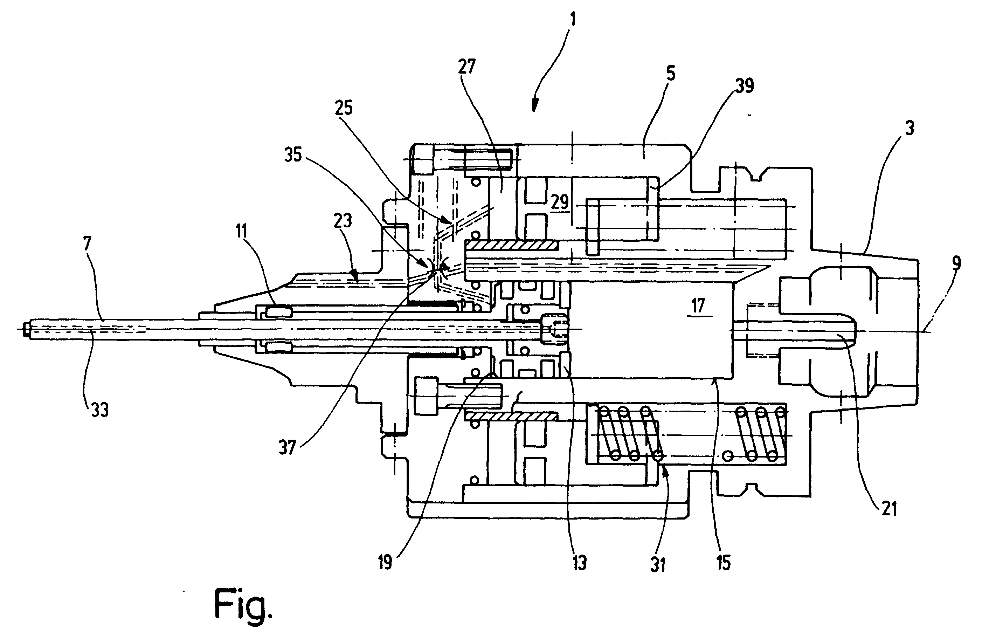

Die Erfindung wird im folgenden anhand der Zeichnung näher erläutert. Die einzige Figur zeigt einen Längsschnitt durch ein Werkzeug.

Bei dem hier beschriebenen Werkzeug handelt es sich allgemein um ein Werkzeug zur spanabtragenden Bearbeitung von Bohrungsoberflächen. Besonders bevorzugt wird dieses Werkzeug für die Bearbeitung von Ventilsitzflächen und den zugehörigen Ventilführungen herangezogen. Im folgenden wird beispielhaft davon ausgegangen, daß es sich also um ein sogenanntes Ventilsitzwerkzeug handelt, mit dem eine Bearbeitung der Oberflächen für Ventile einer Brennkraftmaschine möglich ist.

Die Figur zeigt ein Werkzeug 1, das über einen geeigneten Schaft 3, der hier als Hohlschaft ausgebildet ist, mit einer Werkzeugmaschine verbunden werden kann. Das Werkzeug 1 umfaßt zwei ineinanderliegende Teilwerkzeuge, die hier konzentrisch zueinander angeordnet sind. Das äußere erste Teilwerkzeug 5 nimmt das innere zweite Teilwerkzeug 7 in sich auf, wobei das zweite Teilwerkzeug 7 in Richtung der gestrichelt dargestellten Drehachse des Werkzeugs 1 gegenüber dem ersten Teilwerkzeug 5 axial verlagerbar ist.

Eine über den Schaft 3 in das erste Teilwerkzeug 5 eingeleitete Drehbewegung wird über einen geeigneten Formschluß 11 auf das zweite Teilwerkzeug 7 übertragen, wobei die Drehmomente sowohl im eingezogenen als auch im ausgefahrenen Zustand des zweiten Teilwerkzeugs 7 übertragen werden.

In der Figur ist das zweite Teilwerkzeug 7 in seiner ausgefahrenen Position gezeigt.

An dem im Inneren des ersten Teilwerkzeugs 5 liegenden Ende des zweiten Teilwerkzeugs 7 ist ein Kolben 13 vorgesehen, der in einer Bohrung 15 in Richtung der Drehachse 9 verschieblich angeordnet und starr mit dem zweiten Teilwerkzeug gekoppelt ist. Der Kolben 13 ist so ausgebildet, daß er die Bohrung 3 in zwei druckdicht voneinander getrennte Räume 17 und 19 unterteilt.

In den ersten Raum 17, der in dem hier dargestellten Schnitt rechts von dem Kolben 13 liegt, kann über eine Zufuhrleitung 21 ein erstes Medium eingeführt werden, beispielsweise Schmier- und/oder ein Kühlmittel, das im Betrieb des Werkzeugs 1 zur Kühlung und Schmierung der bearbeiteten Bohrungsoberflächen Verwendung findet.

Das Kühlmittel kann über einen mehrere Bohrungsabschnitte umfassenden Kühlmittelkanal 23 zum linken Ende des ersten Teilwerkzeugs 5 geleitet werden, wo -hier nicht dargestellte- Schneidmittel zur Bearbeitung einer ersten Bohrungsfläche, beispielsweise des Ventilsitzes, vorgesehen sind.

In dem zweiten Raum 19 ist ein zweites Medium, vorzugsweise Hydraulik-Öl vorgesehen, das von dem Kolben 13 gegenüber dem Kühlmittel abgeschlossen ist.

Der zweite Raum 19 ist über einen Verbindungskanal 25 mit einem Ausgleichsraum 27 hydraulisch verbunden. Von dem Kolben 13 bei einer Ausfahrbewegung des ersten Teilwerkzeugs 7 verdrängtes Öl gelangt über den Verbindungskanal 25 aus dem zweiten Raum 19 in den Ausgleichsraum 27. Das zweite Medium befindet sich in einem abgeschlossenen System, das vom ersten Medium getrennt ist.

Der Ausgleichsraum 27 ist als konzentrisch um die Drehachse 9 angeordneter Ringraum ausgebildet, in dem ein hier ebenfalls ringförmig ausgebildeter Ausgleichskolben 29 beweglich angeordnet ist. Auf der dem zweiten Medium beziehungsweise Öl gegenüberliegenden Seite des Ausgleichskolbens 29 ist mindestens ein Federungselement 31 vorgesehen, das hier als Schraubenfeder ausgebildet ist. Es ist auch möglich, als Federungselement eine Gasdruckfeder vorzusehen oder auch nur einen druckdicht abgeschlossenen Raum, der mit einem komprimierbaren Gas gefüllt ist. Der Ausgleichsraum 27 wirkt unmittelbar mit dem Raum 19 zusammen. Daß aus dem Raum 19 verdrängte Medium gelangt über den Verbindungskanal 25 in den Ausgleichsraum 29. Es zeigt sich, daß der ringförmige Ausgleichsraum einen sehr kompakten Aufbau des Werkzeugs 1 ermöglicht, da er ringförmig um das Zentrum des Werkzeugs herumgeführt ist, wo sich der erste Kolben 13 befindet. Entsprechend ist in dem Ausgleichsraum 27 der ringförmige Ausgleichskolben 29 untergebracht, der das Innere des Werkzeugs und damit den Kolben 13 umgibt und der damit nicht zu einem Zuwachs der axialen Längsausdehnung des Werkzeugs 1 führt. Insgesamt ergibt sich durch die konzentrische Ausgestaltung des ersten Kolbens 13 und des Ausgleichskolbens 29 ein sehr kompakter kurzer Aufbau des Werkzeugs 1, so daß dieses in sich sehr starr ist und eine sehr exakte Bearbeitungsqualität ermöglicht.

Um ein Verkanten des Ausgleichskolbens 29 zu vermeiden, werden in -vorzugsweise gleichmäßigen-Abständen mehrere Federungselemente vorgesehen, die den Ausgleichskolben mit einer Druckkraft beaufschlagen, die diesen in der hier dargestellten Figur nach links drängen.

Das zweite Teilwerkzeug 7 ist ebenfalls mit einem durchgehenden -vorzugsweise zur Drehachse 9 konzentrischen- Kanal 33 versehen, der Kühlmittel aus dem ersten Raum 17 zum linken Ende des zweiten Teilwerkzeugs 7 strömen läßt, wo hier nicht dargestellte Schneideinrichtungen vorgesehen sind. Zusätzlich ist es möglich, daß hier mindestens eine Führungsleiste in die Umfangsfläche des zweiten Teilwerkzeugs 7 eingebracht ist. Der grundsätzliche Aufbau eines Werkzeugs 1, wie es hier dargestellt ist, ist bekannt, so daß hier nicht näher darauf eingegangen wird.

Aus der Schnittdarstellung ist erkennbar, daß mit dem gestrichelt dargestellten Verbindungskanal 25 eine Drosseleinrichtung 35 zusammenwirkt, die eine Drossel 37 umfaßt. Diese stellt einen Strömungswiderstand für das im zweiten Raum 19 vorhandene Medium dar, während dieses durch den Verbindungskanal 25 strömt.

Die Drosseleinrichtung 35 kann als Konstantdrossel oder auch als variable Drossel ausgebildet sein. Es ist im übrigen auch möglich, die Drosseleinrichtung 35 als Durchflußmengenregler auszubilden, der beispielsweise von außen (mechanisch, elektrisch oder hydraulisch) einstellbar ist.

Bevorzugt wird die Drosseleinrichtung 35 so ausgebildet, daß sie mindestens ein hier nicht dargestelltes Rückschlagventil umfaßt, welches während einer Bewegung des Kolbens 13 nach links in geschlossener Stellung ist und das diese geschlossene Position einhält, während der Druck im zweiten Raum 19 größer ist als im Ausgleichsraum 27. Im übrigen ist das Rückschlagventil so ausgebildet, daß es seine geöffnete Position einnimmt, wenn der Druck im Ausgleichsraum 27 größer ist als im zweiten Raum 19.

Das Rückschlagventil überbrückt quasi die Drossel 37 und dient dazu, daß das aus dem zweiten Raum 19 in den Ausgleichsraum 27 fließende Medium ausschließlich durch die Drossel 37 strömt, während bei einer umgekehrten Strömung die Drossel 37 praktisch überbrückt wird und das Medium über das Rückschlagventil aus dem Ausgleichsraum 27 in den zweiten Raum 19 strömt. Auf die Funktionsweise der Drosseleinrichtung 35 wird unten noch näher eingegangen.

Der Ausgleichskolben 29 trennt den Ausgleichsraum 27 von einem an dem dem Ausgleichsraum 27 gegenüberliegenden Ende des Ausgleichskolbens 29 angrenzenden Raum 39 der mit einem komprimierbaren Medium gefüllt sein kann, das auch -über geeignete Filtereinrichtungen- mit der Umgebung verbunden sein kann.

Im folgenden wird auf die Funktion des Werkzeugs 1 näher eingegangen:

Bei der Bearbeitung eines Ventilsitzes ist das zweite Teilwerkzeug 7 gänzlich in das erste Teilwerkzeug 5 eingezogen. Mit dem ersten Teilwerkzeug 5 wird zunächst der Ventilsitz, also eine erste Bohrungsoberfläche, bearbeitet und dann das Werkzeug 1, damit auch das erste Teilwerkzeug 5, etwas zurückgezogen, so daß die bearbeitete Bohrungs- beziehungsweise Ventilsitzoberfläche nicht mehr berührt wird. Bei der Bearbeitung des Ventilsitzes wird das erste Medium, hier also ein Kühlmittel, über die Zufuhrleitung 21 in den ersten Raum 17 eingeleitet. Von dort gelangt das Kühlmittel über den Kühlmittelkanal 23 zur bearbeitenden Ventilsitzoberfläche. Das aus dem Kanal 33 austretende Kühl- und Schmiermittel ist dabei zu vernachlässigen, insbesondere dann, wenn der Querschnitt des Kanals 33 kleiner gewählt wird als der Querschnitt des Kühlmittelkanals 23.

In dieser ersten Bearbeitungsphase steht das Kühlmittel unter einem relativ geringen Überdruck von beispielsweise 4 bar. Dieser Druck reicht nicht aus, den Kolben 13 nach links zu bewegen, weil der Ausgleichskolben 29 durch das Federungselement 31 mit einer nach links gerichteten Kraft beaufschlagt ist, so daß das zweite Medium beziehungsweise öl aus dem Ausgleichsraum 27 über das hier nicht dargestellte Rückschlagventil in den zweiten Raum 19 verdrängt wird, so daß auf der dem ersten Raum 17 gegenüberliegenden Oberfläche des Kolbens 13 eine Druckkraft lastet, die größer ist die vom Kühlmittel aufgebaute Druckkraft. Das beziehungsweise die Federungselemente 31 ist/sind also so ausgelegt, daß das unter Druck stehende Kühlmittel den Kolben 13 und damit das zweite Teilwerkzeug nicht verlagert ist, während mit dem ersten Teilwerkzeug 5 der Ventilsitz im ersten Bearbeitungsschritt bearbeitet wird. Die Kraft des/der Federungselemente 31 muß so hoch gewählt werden, daß in der ersten Bearbeitungsphase, in der das zweite Teilwerkzeug 7 noch nicht ausgefahren werden soll, eine ausreichende Kühlung und Schmierung gewährleistet ist.

Nach Beendigung des ersten Bearbeitungsschrittes wird der Kühlmitteldruck so weit erhöht, daß die von dem Federungselement 31 aufgebauten Druckkräfte, die über das zweite Medium auf den Kolben 13 übertragen werden, überwunden werden. In dieser Phase beträgt der Kühlmitteldruck beispielsweise circa 15 bar.

Der im ersten Raum 17 durch das Kühlmittel aufgebaute Druck wird über den Kolben 13 auf den zweiten Raum 19 übertragen. Dadurch erhöht sich im zweiten Raum 19 der Druck schließlich so weit, daß der Kolben 13 nach links verlagert und das zweite Medium beziehungsweise das öl über den Verbindungskanal 25 aus dem zweiten Raum 19 in den Ausgleichsraum 27 verdrängt wird. Dabei entsteht über der Drossel 37 der Drosseleinrichtung 35 ein Druckabfall, so daß der im zweiten Raum 19 gegebene Druck höher ist als der im Ausgleichsraum 27 herrschende Druck. Dadurch schließt das Rückschlagventil, so daß das von dem Kolben 13 aus dem zweiten Raum 19 verdrängte Fluid ausschließlich über den Verbindungskanal 25 und über die Drossel 37 strömt, also nicht über das Rückschlagventil.

Durch die Drossel 37 der Drosseleinrichtung 35 wird ein Strömungswiderstand aufgebaut, durch den gewährleistet ist, daß das zweite Medium definiert aus dem zweiten Raum 19 abströmt. Dadurch stellt sich eine definierte Vorschubbewegung des Kolbens 13 innerhalb der Bohrung 15 und damit eine gleichmäßige Bewegung des zweiten Teilwerkzeugs 7 gegenüber dem ersten Teilwerkzeug 5 ein. Die Geschwindigkeit der Vorschubbewegung kann durch die Drosseleinrichtung beeinflußt und auf einen gewünschten Wert eingestellt werden.

In dieser zweiten Bearbeitungsphase wird mit Hilfe des zweiten Teilwerkzeugs 7 die Ventilsitzführung, also die zweite Bohrungsoberfläche, bearbeitet. Der Bearbeitungsbereich wird durch das Kühl- und Schmiermittel erreicht, das aus dem ersten Raum 17 über den Kanal 33 zum linken Ende des zweiten Teilwerkzeugs 7 strömt.

Nach Bearbeitung der Ventilsitzführung wird der Druck in der Kühlmittelzufuhr -vorzugsweise schlagartig- gesenkt. Dadurch fallen die im ersten Raum 17 gegebenen Druckkräfte, die auf dem Kolben 13 wirken, aus, so daß auch im zweiten Raum 19 der Druck absinkt. In dem Ausgleichsraum 27 wird durch das Federungselement 31, welches auf den Ausgleichskolben 29 wirkt und diesen nach links drückt, ein Überdruck aufgebaut. Der Ausgleichskolben 29 verdrängt dabei das zweite Medium aus dem Ausgleichsraum 27 in den zweiten Raum 19. Da das Öl über die Drossel 37 nicht ohne weiteres aus dem Ausgleichsraum 27 in den zweiten Raum 19 abfließen kann, stellt sich nun im Ausgleichsraum 27 ein höherer Druck ein als im zweiten Raum 19. Aufgrund dieser Druckverhältnisse öffnet das Rückschlagventil.

Durch das öffnen des Rückschlagventils wird die Drossel 37 überbrückt, so daß der Strömungswiderstand zwischen dem Ausgleichsraum 27 und dem zweiten Raum 19 stark reduziert ist. Das Öl kann daher sehr schnell aus dem Ausgleichsraum 27 in den zweiten Raum 19 strömen. Dadurch werden auf den Kolben 13 Druckkräfte ausgeübt, die diesen nach rechts verlagern. Die Druckkräfte bewirken also eine Einzugsbewegung des zweiten Teilwerkzeugs 7 gegenüber dem ersten Teilwerkzeug 5, wobei diese Bewegung relativ rasch erfolgen kann, da über das Federungselement 31 recht hohe Druckkräfte auf den Ausgleichskolben 29 ausgeübt werden können, die das öl rasch aus dem Ausgleichsraum 27 in den zweiten Raum 19 verdrängen. Die Rückzugsgeschwindigkeit kann durch die Wahl der von dem Federungselement ausgeübten Kräfte bestimmt werden.

Um eine sehr rasche Rückzugsbewegung des zweiten Teilwerkzeugs 7 zu gewährleisten, können auch mehrere Rückschlagventile vorgesehen werden, die eine Hydraulikverbindung zwischen dem Ausgleichsraum 7 und dem zweiten Raum 19 herstellen, die sich durch einen sehr geringen Strömungswiderstand auszeichnet.

Bei einem schlagartigen Druckabbau in der Kühlmittelzufuhr erfolgt also nach allem eine schlagartige Rückzugsbewegung des zweiten Teilwerkzeugs 7, wenn die Drosseleinrichtung 35 mit mindestens einem Rückschlagventil der hier beschriebenen Art versehen ist.

Wesentlich ist noch, daß die Fläche des Kolbens 13, die mit dem zweiten Medium beziehungsweise dem Öl beaufschlagt ist, wesentlich kleiner ist als die Fläche des Ausgleichskolbens 29, der mit diesem zweiten Medium beaufschlagt wird. Das von dem Kolben 13 verdrängte Volumen, das aus dem zweiten Raum 19 in den Ausgleichsraum 27 strömt, bewirkt daher nur eine vergleichsweise kleine Verlagerung des Ausgleichskolbens 29, während das zweite Teilwerkzeug 7 relativ weit aus dem ersten Teilwerkzeug 5 ausfährt. Die hier gewählten Flächenverhältnisse sind deshalb besonders einfach zu realisieren, weil der Ausgleichskolben 29 ringförmig ausgebildet und um den Kolben 13 herumgeführt ist. So ergibt sich auf einfache Weise die gewünschte größere Fläche des Ausgleichskolbens 29.

Es ist beispielsweise möglich, bei einer Verlagerung des zweiten Teilwerkzeugs um circa 50 mm einen Hub von nur circa 6 mm beim Ausgleichskolben 29 zu realisieren. Diese Wege ergeben sich bei einem Verhältnis der Flächen der Kolben 13 und 29 von circa 1:8. Das hier dargestellte Werkzeug baut also sehr klein und kompakt. Es ist daher auch relativ leicht.

Es ist vorteilhafter Weise möglich, eine Kontrolleinrichtung vorzusehen, die die Menge des in dem zweiten Raum 19 und dem Ausgleichsraum 27 vorhandenen zweiten Mediums beziehungsweise des Hydrauliköls erfaßt. Denkbar ist es, einen Kontrollstift vorzusehen, der plan mit der Oberfläche des Werkzeugs abschließt, wenn der gewünschte Ölvorrat gegeben ist und der versenkt angeordnet ist, wenn ein Verlust eintritt.

Nach allem wird deutlich, daß mit dem Werkzeug 1 zwei Bohrungsoberflächen bearbeitet werden können, die vorzugsweise konzentrisch angeordnet sind. Für die Bearbeitung der ersten Bohrungsoberfläche beziehungsweise des Ventilsitzes, ist das erste Teilwerkzeug 5 vorgesehen, während für die Bearbeitung der zweiten Bohrungsoberfläche beziehungsweise der Ventilführung das zweite Teilwerkzeug 7 eingesetzt wird. Die Bearbeitung der Bohrungsoberflächen kann nacheinander erfolgen, wobei insbesondere bei der Bearbeitung der Ventilführung mit Hilfe des zweiten Teilwerkzeugs 7 ein definierter Vorschub gegeben ist, der dadurch einstellbar ist, daß die Drosseleinrichtung 35 eine Drossel 37 umfaßt. Der Einsatz des Werkzeuges 1 in Bearbeitungsstationen ist deshalb besonders leicht möglich, weil ein sehr rascher Rückzug des zweiten Teilwerkzeugs 7 durch die besondere Ausgestaltung der Drosseleinrichtung 35 möglich ist, nämlich dadurch, daß mindestens ein Rückschlagventil vorgesehen ist, welches einen raschen Rückstrom des zweiten Mediums aus dem Ausgleichraum 27 in den zweiten Raum 19 ermöglicht und damit eine rasche Rückzugbewegung des zweiten Teilwerkzeugs 7 sicherstellt, sobald der Druck des Kühlmittels, daß der Ausfahrbewegung des zweiten Teilwerkzeugs 7 dient, abgesenkt ist. Das Werkzeug 1 kann also nach der Bearbeitung einer Ventilführung rasch an den nächsten Bearbeitungsort weiterbewegt werden.

Die Vorschubbewegung beziehungsweise die Vorschubgeschwindigkeit des zweiten Teilwerkzeugs 2 wird durch den Druck des Kühlmittels, durch den Strömungswiderstand der Drossel 7 und durch den Gegendruck des Federungselements 31 beeinflußt. Es bestehen also zahlreiche Möglichkeiten, die Bewegungsgeschwindigkeit des zweiten Teilwerkzeugs 7 einzustellen. Insbesondere ist es denkbar, den Kühlmitteldruck kontinuierlich zu steigern, um dem wachsenden Gegendruck des Federungselements 31 entgegenzuwirken und um eine gleichmäßige Vorschubbewegung des zweiten Teilwerkzeugs 7 über dessen gesamten Arbeitshub zu gewährleisten. Eine gleichmäßige Vorschubbewegung kann auch durch einen entsprechend ausgelegten Durchflußmengenregler erreicht werden.

Nach allem wird deutlich, daß das hier beschriebene Werkzeug 1 relativ einfach aufgebaut ist. Es ist ohne weiteres möglich zwei Kolben, nämlich den ersten Kolben 13 und den Ausgleichskolben 29, im Inneren des Werkzeugs 1 unterzubringen und dabei einen sehr kompakten Aufbau zu gewährleisten. Insbesondere ist sichergestellt, daß die in Längsrichtung beziehungsweise in Richtung der Drehachse des Werkzeugs 1 gemessene Länge gegenüber anderen Werkzeugen sehr kurz ist. Das hier beschriebene Werkzeug zeichnet sich daher durch eine sehr große Steifigkeit aus, die eine sehr exakte Bearbeitung von Bohrungsoberflächen ermöglicht. Die Auslenkung des Werkzeugs bei der Bearbeitung von Ventilflächen ist nach allem sehr gering, so daß die bearbeiteten Flächen sich durch eine sehr hohe Präzision und Oberflächengüte auszeichnen.

## Patentansprüche

1. Werkzeug zur spanabtragenden Bearbeitung von Bohrungsoberflächen, mit mindestens zwei gegeneinander verlagerbaren Teilwerkzeugen, die beide mit Schneideeinrichtungen versehen sind, wobei ein inneres Teilwerkzeug in einem äußeren Teilwerkzeug geführt ist, **dadurch gekennzeichnet, daß** das Werkzeug (1) einen ersten Kolben (13) umfaßt, der zur Erzeugung einer Ausfahrbewegung des inneren Teilwerkzeugs (7) mit einem unter Druck stehenden ersten Medium beaufschlagbar ist, daß der erste Kolben (13) bei der Ausfahrbewegung des inneren Teilwerkzeugs (7) ein zweites Medium über einen Verbindungskanal (25) in einen Ausgleichsraum (27) verdrängt und daß der Ausgleichsraum (27) als konzentrisch um die Drehachse angeordneter Ringraum ausgebildet ist, in dem ein ebenfalls ringförmig ausgebildeter Ausgleichskolben (29) beweglich angeordnet ist.

2. Werkzeug nach Anspruch 1, **dadurch gekennzeichnet, daß** in dem Verbindungskanal (25) zum Ausgleichsraum (27) eine Drosseleinrichtung (35) vorgesehen ist, die die Abströmung des zweiten Mediums in den Ausgleichsraum beeinflußt.

3. Werkzeug nach Anspruch 2, **dadurch gekennzeichnet, daß** die Drosseleinrichtung (35) eine Konstantdrossel (37) umfaßt.

4. Werkzeug nach Anspruch 2, **dadurch gekennzeichnet, daß** die Drosseleinrichtung (35) eine variable Drossel umfaßt.

5. Werkzeug nach Anspruch 2, **dadurch gekennzeichnet, daß** die Drosseleinrichtung als Durchflußmengenregler ausgebildet ist.

6. Werkzeug nach Anspruch 2, **dadurch gekennzeichnet, daß** die Drosseleinrichtung (35) mindestens ein Rückschlagventil umfaßt, das bei der Rückströmung des zweiten Mediums aus dem Ausgleichsraum (27) in den zweiten Raum (19) einen stark reduzierten Strömungswiderstand aufweist.

7. Werkzeug nach Anspruch 6, **dadurch gekennzeichnet, daß** das Rückschlagventil öffnet, wenn der Druck des zweiten Mediums im Ausgleichsraum (27) größer ist als der des ersten Medium im ersten Raum (17).

8. Werkzeug nach einem der vorangehenden Ansprüche, **dadurch gekennzeichnet, daß** die Fläche des Ausgleichkolbens (29) größer ist als die des ersten Kolbens (13).

9. Werkzeug nach Anspruch 8, **dadurch gekennzeichnet, daß** der Ausgleichskolben (29) mit einem Federungselement (31) zusammenwirkt, das der von dem zweiten Medium ausgeübten Kraft entgegenwirkt.

10. Werkzeug nach Anspruch 9, **dadurch gekennzeichnet, daß** das Federungselement (31) als Schraubenfeder öder als Gasdruckfeder ausgebildet ist.

11. Werkzeug nach Ansprüche einem der vorangehenden, **dadurch gekennzeichnet, daß** zwei verschiedene Medien einsetzbar sind.

12. Werkzeug nach Anspruch 11, **dadurch gekennzeichnet, daß** das erste Medium Kühlmittel und daß das zweite Medium Öl ist.

## Claims

1. Tool for the machining of drilled-hole surfaces, having at least two part-tools which are displaceable relative to each other and which are both provided with cutting devices, an inner part-tool being guided in an outer part-tool, **characterized in that** the tool (1) comprises a first piston (13) which can be acted upon by a pressurized first medium in order to generate an outward movement of the inner part-tool (7), **in that** during the outward movement of the inner part-tool (7) the first piston (13) displaces a second medium via a connection channel (25) into a compensating chamber (27), and **in that** the compensating chamber (27) is designed as an annular chamber which is arranged concentrically around the axis of rotation and in which a likewise annular compensating piston (29) is movably arranged.

2. Tool according to Claim 1, **characterized in that** in the connection channel (25) to the compensating chamber (27) there is a throttle device (35) which acts on the flow of the second medium into the compensating chamber.

3. Tool according to Claim 2, **characterized in that** the throttle device (35) comprises a constant throttle (37).

4. Tool according to Claim 2, **characterized in that** the throttle device (35) comprises a variable throttle.

5. Tool according to Claim 2, **characterized in that** the throttle device is designed as a through-flow regulator.

6. Tool according to Claim 2, **characterized in that** the throttle device (35) comprises at least one nonreturn valve which has a greatly reduced flow resistance when the second medium flows back from the compensating chamber (27) into the second chamber (19).

7. Tool according to Claim 6, **characterized in that** the nonreturn valve opens when the pressure of the second medium in the compensating chamber (27) is greater than that of the first medium in the first chamber (17).

8. Tool according to one of the preceding claims, **characterized in that** the surface of the compensating piston (29) is greater than that of the first piston (13).

9. Tool according to Claim 8, **characterized in that** the compensating piston (29) interacts with a spring element (31) which counteracts the force exerted by the second medium.

10. Tool according to Claim 9, **characterized in that** the spring element (31) is designed as a helical spring or as a pneumatic compression spring.

11. Tool according to one of the preceding claims, **characterized in that** two different media can be used.

12. Tool according to Claim 11, **characterized in that** the first medium is coolant and the second medium is oil.

## Revendications

1. Outil pour l'usinage avec enlèvement de copeaux de la surface de perçages, comportant au moins deux parties d'outil mobiles l'une par rapport à l'autre, ces deux parties d'outil ayant des dispositifs de coupe,
une partie d'outil intérieure étant guidée dans une partie d'outil extérieure,
**caractérisé en ce que**
l'outil (1) comprend un premier piston (13) qui pour créer un mouvement de déploiement de la partie d'outil intérieure (7) est soumis à un premier fluide sous pression,
le premier piston (13), lors du mouvement de déploiement de la partie intérieure. (7) de l'outil refoule un second fluide par un canal de liaison (25) dans une chambre d'équilibrage (27) et
la chambre d'équilibrage (27) est une chambre annulaire concentrique à l'axe de rotation dans laquelle se trouve un piston d'équilibrage (29) également annulaire, mobile.

2. Outil selon la revendication 1,
**caractérisé par**
un dispositif d'étranglement (35) prévu dans le canal de liaison (25) de la chambre d'équilibrage (27), ce dispositif d'étranglement influençant l'écoulement du second fluide vers la chambre d'équilibrage.

3. Outil selon la revendication 2,
**caractérisé en ce que**
le dispositif d'étranglement (35) est un organe d'étranglement constant (37).

4. Outil selon la revendication 2,
**caractérisé en ce que**
le dispositif d'étranglement (35) est un organe d'étranglement variable.

5. Outil selon la revendication 2,
**caractérisé en ce que**
le dispositif d'étranglement est un régulateur de débit.

6. Outil selon la revendication 2,
**caractérisé en ce que**
le dispositif d'étranglement (35) comprend au moins un clapet anti-retour qui, lors de l'écoulement en retour du second fluide à partir de la chambre d'équilibrage (27) vers la seconde chambre (19), présente une perte de charge fortement réduite.

7. Outil selon la revendication 6,
**caractérisé en ce que**
le clapet anti-retour s'ouvre si la pression du second fluide dans la chambre d'équilibrage (27) est supérieure à celle du premier fluide dans la première chambre (17).

8. Outil selon l'une quelconque des revendications précédentes,
**caractérisé en ce que**
la surface du piston d'équilibrage (29) est supérieure à celle du premier piston (13).

9. Outil selon la revendication 8,
**caractérisé en ce que**
le piston d'équilibrage (29) coopère avec un élément de ressort (31) qui s'oppose à la force développée par le second fluide.

10. Outil selon la revendication 9,
**caractérisé en ce que**
l'élément de ressort (31) est un ressort hélicoïdal ou un ressort à gaz.

11. Outil selon l'une quelconque des revendications précédentes,
**caractérisé en ce qu'**
il utilise deux fluides différents.

12. Outil selon la revendication 11,
**caractérisé en ce que**
le premier fluide est un fluide de refroidissement et le second fluide est de l'huile.
